# EUROPEAN PATENT APPLICATION

(11) **EP 3 487 210 A1**
(43) Date of publication of application: **22.05.2019**
(21) Application number: 17827388.4
(22) Date of filing: 23.06.2017
(51) Int. Cl.: H04W 28/04, H04L 29/08, H04W 72/04, H04W 72/14, H04W 74/08

(54) **USER DEVICE AND WIRELESS COMMUNICATION METHOD**

(30) Priority: 15.07.2016 JP 2016140734
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2017/023252
(87) International publication number: WO 2018/012258

(57) **Abstract**

Provided is a user equipment in a radio communication system that includes a plurality of user equipments and a base station and supports a communication scheme in which uplink radio resources are shared by the plurality of user equipments, and the user equipment includes a control unit that determines that retransmission of an uplink signal is performed when NACK is received from the base station with respect to the uplink signal or when none of ACK and NACK are received with respect to the uplink signal and a transmitting unit that retransmits the uplink signal on the basis of a predetermined retransmission scheme when the control unit determines that the retransmission of the uplink signal is performed.

## Description

### TECHNICAL FIELD

The present invention relates to a user equipment and a radio communication method.

### BACKGROUND ART

In Long Term Evolution (LTE), in order to further increase a system capacity, further increase a data transmission rate, and further decrease delay in a radio section, a radio communication scheme called 5G has been discussed.

In 5G, various radio technologies have been discussed in order to satisfy requirements that a delay of a radio section be 1 ms or less while realizing throughput of 10 Gbps or more. Further, in order to respond to services represented by Internet of things (IoT), an element technology capable of enabling an enormous number of machine type communication (MTC) terminals to perform data transmission via a radio network of 5G has been discussed. A technology capable of enabling a large number of MTC terminals to access a network is called massive machine-type-communications (mMTC) in 5G.

### CITATION LIST

### NON-PATENT DOCUMENT

Non-Patent Document 1: 3 GPP TR 38.913 V 0.2.0 (2016-02)

### SUMMARY OF THE INVENTION

### PROBLEM TO BE SOLVED BY THE INVENTION

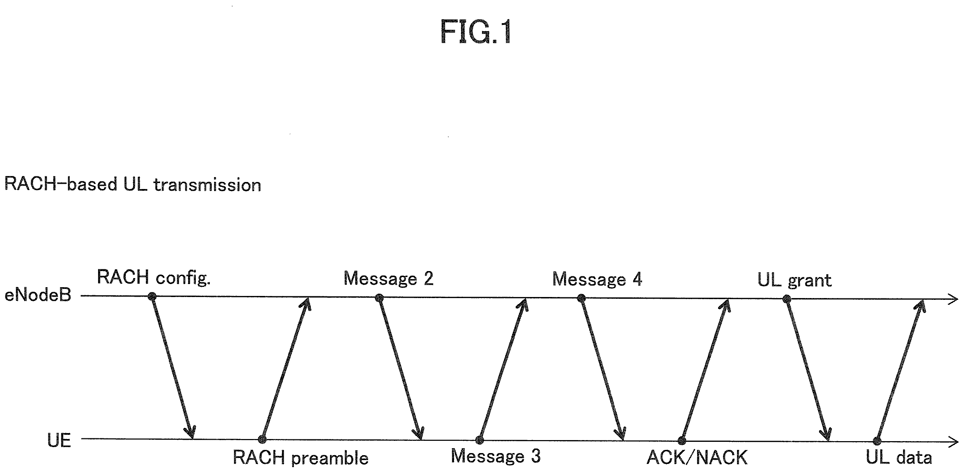

Here, when access from a large number of MTC terminals to a network occurs, an amount of signaling messages (control signals) is likely to be huge. For example, in existing LTE, in order to prevent a collision between uplink (UL) signals, an access scheme that enables a base station to generally control UL scheduling through a random access (RA) procedure is employed (Fig. 1). Therefore, when access from a large number of MTC terminals occurs, the amount of signaling messages becomes enormous.

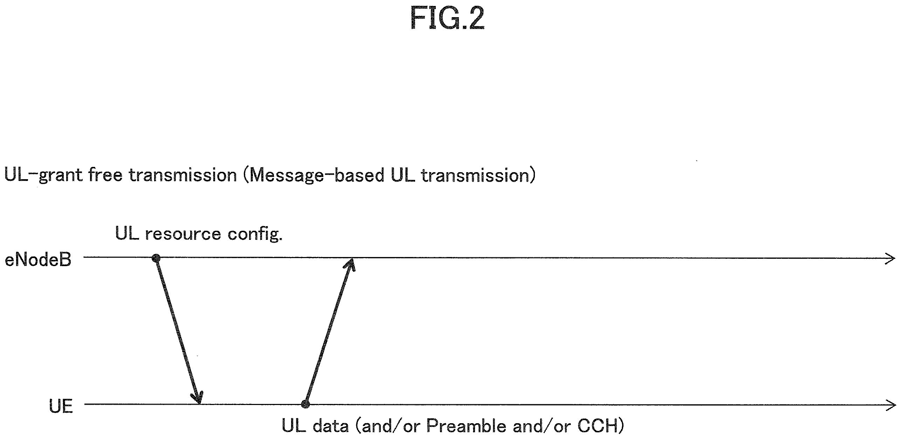

In this regard, in mMTC, in order to reduce the amount of signaling messages, the use of a contention based access scheme in which a plurality of MTC terminals share uplink radio resources, and contention of an UL signal is allowed (also referred to as a "grant free access," "message-based transmission," or a "non-orthogonal access scheme") has been discussed (Fig. 2). When the contention based access scheme is used, the amount of signaling messages can be considered to be reduced although access from a large number of MTC terminals to the base station occurs.

However, when the contention based access scheme is used, since it is assumed that a UL signal transmitted from one terminal collides with a UL signal from another terminal, and thus a reception quality greatly deteriorates, if a collision occurs each time transmission is performed, there is a possibility that the terminal is unable to transmit the UL signal to the base station. For this reason, there is a need for a mechanism capable of effectively performing retransmission of UL signals while using the contention based access scheme.

The technology of the disclosure has been made in light of the foregoing, and it is an object of the technology of the disclosure to provide a technique capable of efficiently performing retransmission of UL signals when a contention based access scheme is used.

### MEANS FOR SOLVING PROBLEM

A UE according to the technology of the disclosure is a user equipment in a radio communication system that includes a plurality of user equipments and a base station and supports a communication scheme in which uplink radio resources are shared by the plurality of user equipments, and includes a control unit that determines that retransmission of an uplink signal is performed when NACK is received from the base station with respect to the uplink signal or when none of ACK and NACK are received with respect to the uplink signal and a transmitting unit that retransmits the uplink signal on the basis of a predetermined retransmission scheme when the control unit determines that the retransmission of the uplink signal is performed.

### EFFECT OF THE INVENTION

According to the technology of the disclosure, a technique capable of efficiently performing retransmission of UL signals when a contention based access scheme is used is provided.

### BRIEF DESCRIPTION OF DRAWINGS

Fig. 1 is a diagram illustrating a non-contention based access scheme;
Fig. 2 is a diagram illustrating a contention based access scheme;
Fig. 3 is a diagram illustrating an exemplary configuration of a radio communication system according to an embodiment;
Fig. 4 is a diagram illustrating an example in which radio resources are distinguished for each access scheme;
Fig. 5 is a diagram for describing a problem related to an embodiment;
Fig. 6 is a diagram for describing a retransmission scheme 1-1;
Fig. 7 is a diagram for describing a retransmission scheme 1-2;
Fig. 8 is a diagram for describing a retransmission scheme 1-3;
Fig. 9 is a diagram for describing a retransmission scheme 1-4;
Fig. 10 is a diagram for describing an OVSF code;
Fig. 11 is a diagram for describing a retransmission scheme 1-5;
Fig. 12 is a diagram for describing a retransmission scheme 2-4;
Fig. 13 is a diagram illustrating an example of a transmission element included in a format of a UL signal;
Fig. 14 is a diagram for describing a retransmission scheme 3-1;
Fig. 15 is a diagram for describing a retransmission scheme 3-2;
Fig. 16 is a diagram for describing a retransmission scheme 3-3;
Fig. 17 is a diagram for describing a retransmission scheme 4;
Fig. 18 is a diagram illustrating an ACK/NACK reception timing (reception window);
Fig. 19 is a diagram illustrating an example of a functional configuration of a UE according to an embodiment;
Fig. 20 is a diagram illustrating an example of a functional configuration of an eNB according to an embodiment; and
Fig. 21 is a diagram illustrating an example of a hardware configuration of each of a UE and an eNB according to an embodiment.

### MODE(S) FOR CARRYING OUT THE INVENTION

Hereinafter, an exemplary embodiment of the present invention will be described with reference to the appended drawings. An embodiment to be described below is merely an example, and an embodiment to which the present invention is applied is not limited to the following embodiment. For example, a radio communication system according to the present embodiment is assumed to be a system that supports LTE, but the present invention is not limited to LTE and applicable to other schemes. In this specification and claims set forth below, "LTE" is used in a broad sense including Releases 10, 11, 12, and 13 of 3GPP or a 5^{th} generation communication scheme corresponding to Release 14 or later in addition to communication schemes corresponding to Release 8 and 9 of 3GPP.

### <System configuration>

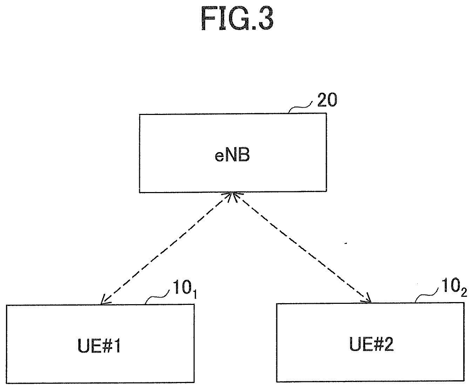

Fig. 3 is a diagram illustrating an exemplary configuration of a radio communication system according to an embodiment. As illustrated in Fig. 3, a radio communication system according to the present embodiment includes a user equipment (UE) 10₁, a UE 10₂, and an enhanced Node B (eNB) 20. In the following description, when UE 101 and UE 102 are not particularly distinguished, they are indicated by a "UE 10." Further, the UE 10₁ is identical to a "UE #1," and the UE 10₂ is identical to the "UE #2." Two UEs 10 are illustrated in Fig. 3, but one UE 10 may be provided, or three or more UEs 10 may be provided. Further, one eNB 20 is illustrated in Fig. 3, but two or more eNBs 20 may be provided.

The UE 10 may be an MTC terminal or a mobile broadband (MBB) terminal. In other words, the UE 10 according to the present embodiment may be any type of terminal.

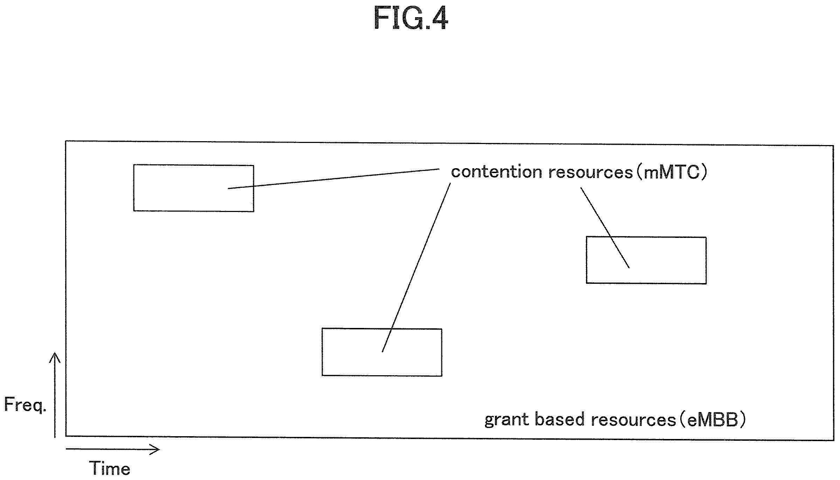

In the radio communication system according to the present embodiment, radio resources to which a grant-based (non-contention based) access scheme similar to existing LTE is applied (grant based resources) and radio resources (contention resources) to which the contention based access scheme is applied may be distinguished or may not be distinguished particularly as illustrated in Fig. 4.

The radio resources to which the contention based access scheme is applied may be specified in a standard specification or the like in advance or may be set in (reported to) the UE 10 using higher layer signaling (RRC or broadcast information (a MIB or a SIB)).

### <Overview>

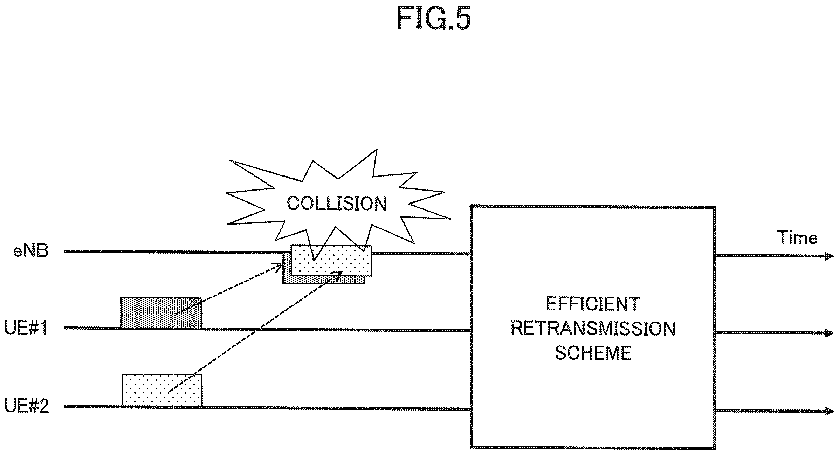

The UE 10 according to the present embodiment transmits the UL signal using the contention based access scheme in which a plurality of UEs 10 are permitted to transmit an UL signal using the same uplink radio resources (frequency and time). For this reason, there is a need for a mechanism capable of enabling the UEs 10 to efficiently retransmit the UL signals when a UL signal collision occurs between the UEs 10 as illustrated in Fig. 5.

Here, the eNB 20 according to the present embodiment is assumed to perform the following operation as a method of notifying the UE 10 of acknowledgment (ACK) or negative acknowledgment (NACK) with respect to the UL signal.
- "eNB operation pattern 1": similarly to existing LTE, an explicit notification of ACK and NACK is given to the UE 10 with respect to the UL signal.
- "eNB operation pattern 2": in order to reduce signaling overhead, an explicit notification of only ACK is given to the UE 10 with respect to the UL signal.

First, when the eNB 20 operates in accordance with the "eNB operation pattern 1," the UE 10 according to the present embodiment recognizes that the notification of "NACK has been given from the eNB 20" in the following cases.
- "UE operation pattern 1": when the UE 10 receives NACK with respect to the UL signal.
- "UE operation pattern 2": when the UE 10 receives none of ACK and NACK with respect to the UL signal (for example, when none of ACK and NACK are received within a predetermined period or when none of ACK and NACK are received at a predetermined timing). The "UE operation pattern 2" corresponds to a case in which the eNB 20 has not detected the UL signal ever.

Then, when the eNB 20 operates in accordance with the "eNB operation pattern 2," the UE 10 recognizes that the notification of "NACK has been given from the eNB 20" in the following case.
- "UE operation pattern 3": when the UE 10 does not receive ACK with respect to the UL signal (for example, when ACK is not received within a predetermined period or not received at a predetermined timing). The "UE operation pattern 3" corresponds to a case in which the eNB 20 has not detected the UL signal or the eNB 20 has detected the UL signal but determines it to be NACK (for example, has fails in a CRC check).

When the UE 10 according to the present embodiment recognizes that the notification of "NACK has been given from the eNB 20" in accordance with the "UE operation pattern 1" to the "UE operation pattern 3," the UE 10 retransmits the UL signal in accordance with one of the following predetermined retransmission schemes.
- "Retransmission scheme 1": retransmission is performed so that a collision of the UL signals is less likely to occur
- "Retransmission scheme 2": retransmission is performed so that the UL signal is easily detected by the eNB 20
- "Retransmission scheme 3": the retransmission scheme is controlled for each of transmission elements included in a format of the UL signal

The transmitting elements will be described later.
- "Retransmission scheme 4": retransmission is performed so that a collision occurs, and combination is performed on the eNB 20 side.

The "retransmission scheme 1" to the "retransmission scheme 3" can be applied when the UE 10 recognizes NACK in accordance with an arbitrary operation pattern among the "UE operation pattern 1" to the "UE operation pattern 3" unless otherwise specified. The "retransmission scheme 4" can be applied when UE 10 recognizes NACK in accordance with the "UE operation pattern 1."

### <Processing procedure>

The "retransmission scheme 1" to the "retransmission scheme 4" performed by the UE 10 will be specifically described below.

### ("Retransmission scheme 1")

In the "retransmission scheme 1," the UE 10 performs retransmission so that a collision of the UL signals is less likely to occur. The "retransmission scheme 1" is further divided into retransmission schemes 1-1 to 1-5.

### [Retransmission scheme 1-1]

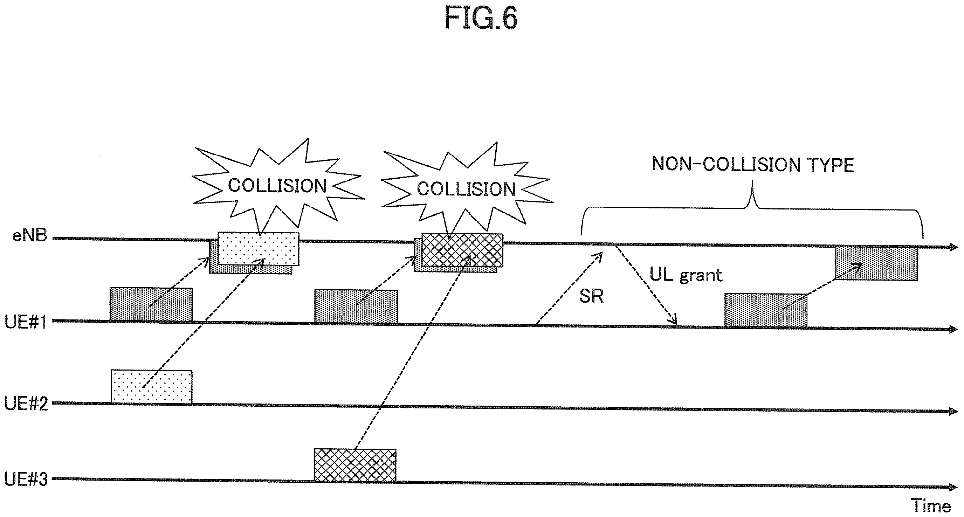

Fig. 6 is a diagram for describing the retransmission scheme 1-1. In the retransmission scheme 1-1, when the notification of NACK is recognized to have been given from the eNB 20 consecutively a predetermined number of times, the UE 10 transmits a scheduling request (SR) to the eNB 20, and retransmits the UL signal using UL radio resources allocated from the eNB 20 on the basis of the scheduling request. Fig. 6 illustrates an example in which the UE 10 transmits the scheduling request the notification of NACK is recognized to have been given from the eNB 20 consecutively two times, and retransmits the UL signal using the UL radio resources allocated from the eNB 20 through the UL grant.

According to the retransmission scheme 1-1, the UE 10 can perform switching to the non-contention based access scheme when the notification of NACK is recognized to have been given consecutively a plurality of times, and thus the UE 10 can transmit the UL signal more efficiently. When NACK is transmitted from the eNB 20 to the UE 10, an instruction to perform the scheduling request may be given at the same time. In this case, the UE 10 can perform switching from the contention based access to the non-contention based access in accordance with the instruction given from the eNB 20.

### [Retransmission scheme 1-2]

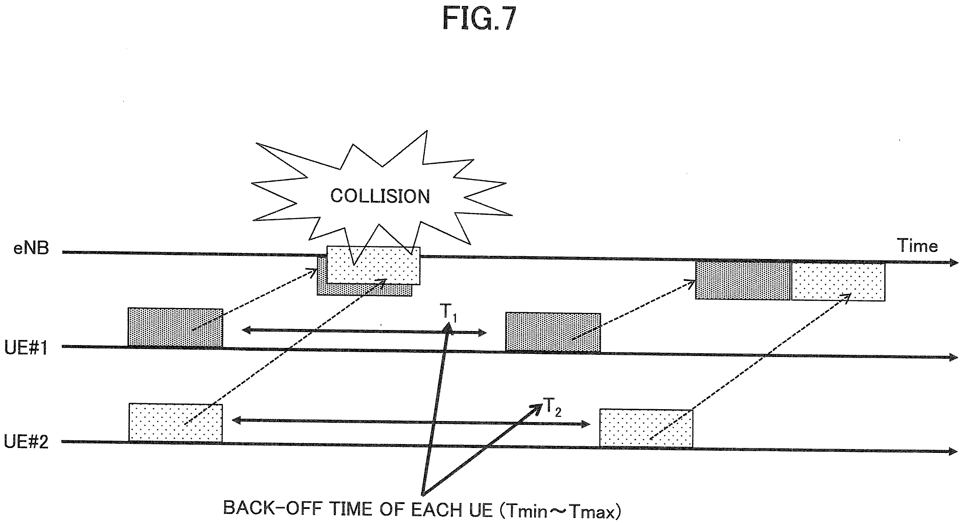

Fig. 7 is a diagram for describing the retransmission scheme 1-2. In the retransmission scheme 1-2, when the notification of NACK is recognized to have been given from the eNB 20, the UE 10 is on standby until a predetermined back-off time elapses, and then retransmits the UL signal.

The predetermined back-off time may be decided for each UE 10 in advance or may be randomly selected within a predetermined range (between T_{MIN} and T_{MAX}), or a back-off time of each UE 10 may be decided on the basis of information specific to the UE 10 (for example, a UE-ID, an international mobile subscriber identity (IMSI), a radio network temporary identity (RNTI), or the like).

Further, when the notification of NACK is recognized to have been consecutively given from the eNB 20, the UE 10 may gradually reduce the back-off time. For example, when the notification of NACK has been given consecutively N times, a next back-off time for retransmission of the UL signal may be calculated by first back-off time × (1/N).

According to the retransmission scheme 1-2, the retransmission timing of the UL signal is dispersed among the UEs 10, and thus a possibility of a collision of the UL retransmission signals is reduced.

### [Retransmission scheme 1-3]

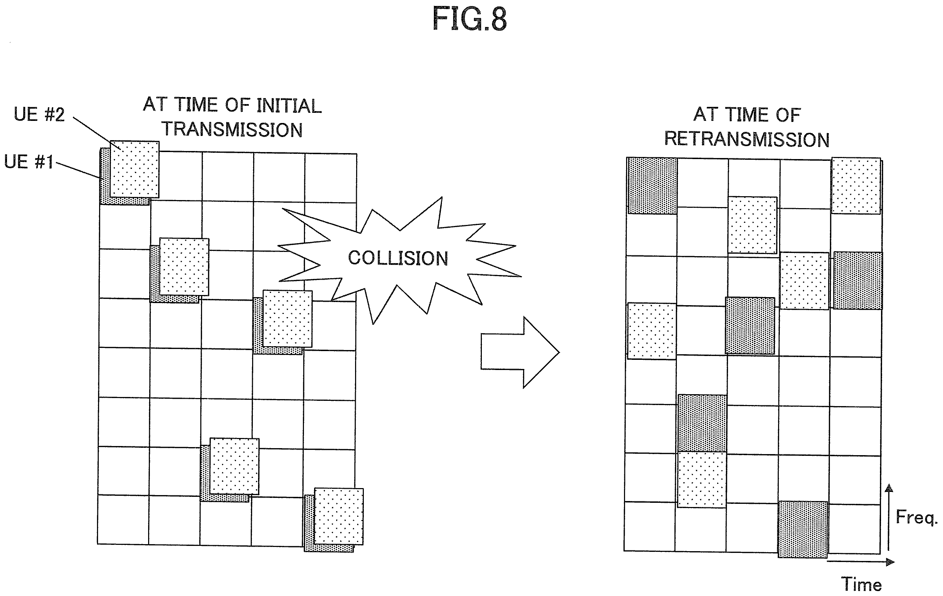

Fig. 8 is a diagram for describing the retransmission scheme 1-3. The retransmission scheme 1-3 is under the assumption that frequency hopping is applied to the transmission of the UL signal.

In the retransmission scheme 1-3, when the notification of NACK is recognized to have been given from the eNB 20, the UE 10 retransmits the UL signal using a frequency hopping pattern different from a frequency hopping pattern used for transmitting the UL signal.

The frequency hopping pattern used at the time of the retransmission of the UL signal may be decided for each UE 10 in advance or may be randomly selected from among a plurality of frequency hopping patterns, or the frequency hopping pattern may be decided for each UE 10 on the basis of information specific to the UE 10 (for example, a UE-ID, an IMSI, a C-RNTI, or the like), a subframe (or slot) number at the time of retransmission of the UL signal, the number of retransmission of the UL signal, and/or the like.

According to the retransmission scheme 1-3, even when a plurality of UEs 10 (for example, the UE #1 and the UE #2) transmit the UL signals using the same frequency hopping pattern at the time of initial transmission (for example, on the left side in Fig. 8), since different frequency hopping patterns are applied to the respective UEs 10 at the time of UL retransmission (for example, on the right side of Fig. 8), the transmission resources of the UL signal are dispersed among the plurality of UEs 10, and the possibility of the collision of the UL retransmission signals is reduced. According to the retransmission scheme 1-3, when the frequency hopping is applied to the transmission of the UL signal, it is possible to reduce the possibility of the collision of the UL retransmission signals.

### [Retransmission scheme 1-4]

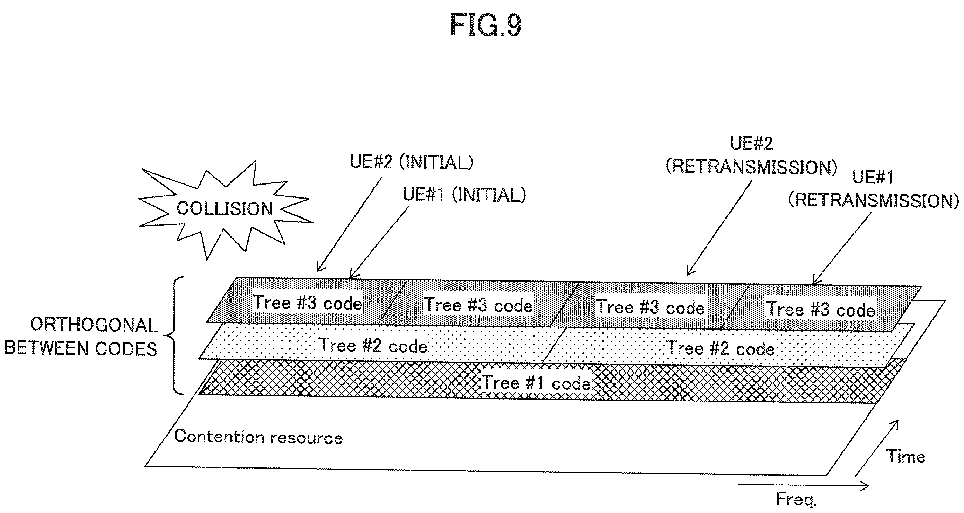

Fig. 9 is a diagram for describing the retransmission scheme 1-4. The retransmission scheme 1-4 is under the assumption that frequency spreading based on a spread code is applied to the transmission of the UL signal.

In the retransmission scheme 1-4, when the notification of NACK is recognized to have been given from the eNB 20, the UE 10 retransmits the UL signal using a spread code different from a spread code used for transmitting the UL signal.

The spread code used at the time of the retransmission of the UL signal may be decided for each UE 10 in advance or may be randomly selected among a plurality of spread code patterns, or the spread code may be decided for each UE 10 on the basis of information specific to the UE 10 (for example, a UE-ID, an IMSI, a C-RNTI, or the like), a subframe (or slot) number at the time of retransmission of the UL signal, the number of retransmission of the UL signal, and/or the like. In the retransmission scheme 1-4, the eNB 20 blind-detects the spread code assumed to be used for the retransmission of the UL signal (that is, detects it in a round-robin manner).

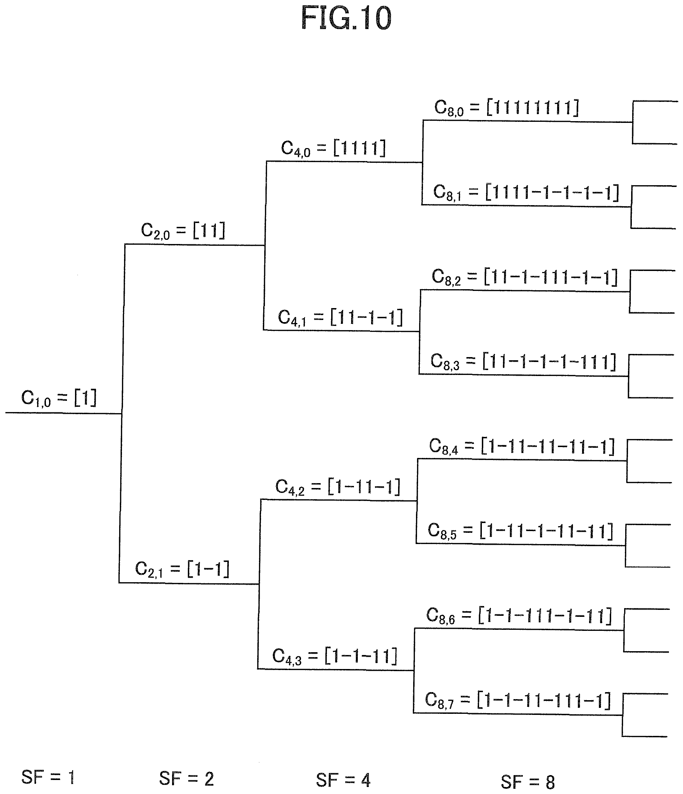

The spread code may be any code, but for example, an orthogonal variable spreading factor (OVSF) code may be used. The OVSF code has a characteristic in which orthogonality is maintained between codes having the same code length, and orthogonality is maintained even between codes having different code lengths unless they are codes derived from the same tree. For example, as illustrated in Fig. 10, orthogonality is maintained between codes (C_{2,0}, C_{2,1}) having the same code length corresponding to SF2, among codes (C_{4,0}, C_{4,1}, C_{4,2}, C_{4,3}) having the same code length corresponding to SF4, and among codes (C_{8,0}, C_{8,1}, C_{8,2}, C_{8,3}, C_{8,4}, C_{8,5}, C_{8,6}, C_{8,7}) having the same code length corresponding to SF8. Further, although not between codes having the same code length, orthogonality is maintained even between codes which are not codes derived from the same tree (for example, C_{4,1} and C_{8,0}, C_{4,1} and C_{8,1}, and the like). Further, the code length of the spread code increases the order of SF 1, SF2, SF4, and SF8.

Fig. 9 illustrates an example of uplink radio resources used for retransmission and the spread code used for UL transmission when an OVSF code is used as the spread code. A "tree #3 code" indicates a spread code with a lower spreading ratio (a shorter code length) than that of a "tree #2 code." The "Tree #2 code" indicates a spread code with a lower spreading ratio (a shorter code length) than that of a "tree #1 code." Further, the radio resources of the UL signal transmitted using the spread code corresponding to the "tree #3 code" are frequency-multiplexed into four, and the radio resources of the UL transmitted using the spread code corresponding to the "tree #2 code" are frequency-multiplexed into two. The frequency multiplexing method is merely an example, and the present invention is not limited thereto, and more radio resources may be frequency-multiplexed, frequency-multiplexing need not be necessarily performed.

Further, in the example of Fig. 9, the respective UEs 10 (the UE #1 and the UE #2) retransmit the UL signals using the same code length and different radio resources at the time of the retransmission of the UL signal, but it is merely an example, and the present invention is not limited thereto. Each UE 10 may perform the retransmission of the UL signal using a spread code with a low (or high) spreading ratio.

According to the retransmission scheme 1-4, even when a plurality of UEs 10 transmit the UL signals using the same spread code at the time of initial transmission, different spread codes are applied to the respective UEs 10 at the time of UL retransmission, and thus it is possible to reduce the possibility of the collision of the UL retransmission signals. According to the retransmission scheme 1-4, the possibility of the collision of the UL retransmission signals can be reduced when frequency spreading based on the spread code is applied to the transmission of the UL signal.

### [Retransmission scheme 1-5]

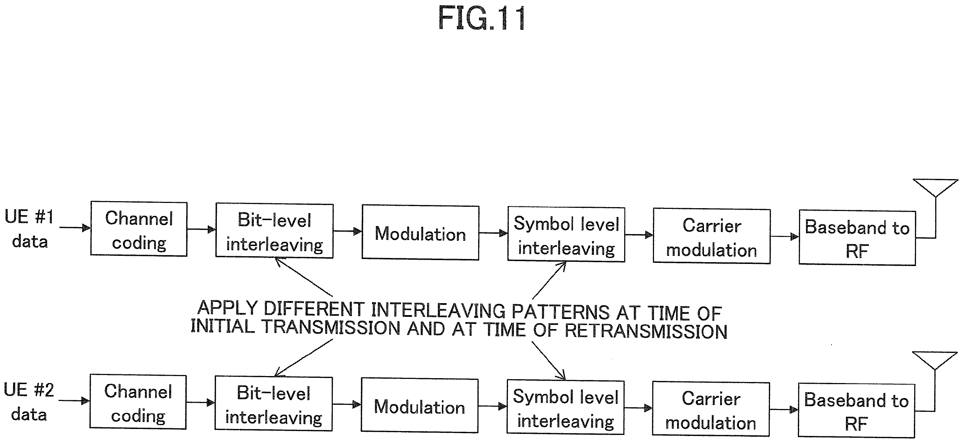

Fig. 11 is a diagram for describing the retransmission scheme 1-5. The retransmission scheme 1-5 is under the assumption that interleave division multiple access (IDMA) is applied to the transmission of the UL signal. The IDMA is a multiplexing scheme in which coding is performed at a very low code rate, and a plurality of signals are multiplexed into radio resources of the same frequency and time by applying a unique interleaving pattern to the UE 10. The IDMA is suitable for a situation in which a large number of terminals transmit a small amount of data.

In the retransmission scheme 1-5, when the notification of NACK is recognized to have been given from the eNB 20, when an interleaving process is applied to an encoded signal of a bit level ("bit-level interleaving" in Fig. 11), and/or when an interleaving process is applied to a modulated signal of a symbol level ("symbol-level interleaving" in Fig. 11), the UE 10 retransmits the UL signal using an interleaving pattern different from an interleaving pattern used for the transmission of the UL signal.

The interleaving pattern used at the time of the retransmission of the UL signal may be decided for each UE 10 in advance or may be randomly selected among a plurality of interleaving patterns, or the interleaving pattern may be decided for each UE 10 on the basis of information specific to the UE 10 (for example, a UE-ID, an IMSI, a C-RNTI, or the like), a subframe (or slot) number at the time of retransmission of the UL signal, the number of retransmission of the UL signal, and/or the like. In the retransmission method 1-5, the eNB 20 blind-detects the interleaving pattern assumed to be used for the retransmission of the UL signal (that is, detects it in a round-robin manner).

According to the retransmission scheme 1-5, even when a plurality of UEs 10 (for example, the UE #1 and the UE #2) transmit the UL signals using the same interleaving pattern at the time of initial transmission, since a different interleaving pattern is applied at the time of UL retransmission, it is possible to reduce the possibility of the collision of the UL retransmission signals. According to the retransmission scheme 1-5, when the IDMA is applied to the transmission of the UL signal, it is possible to reduce the possibility of the collision of the UL retransmission signals.

### ("Retransmission scheme 2")

In the "retransmission scheme 2," the UE 10 performs retransmission so that the UL signal (the UL retransmission signal) is easily detected on the eNB 20 side. The "retransmission scheme 2" is further divided into retransmission schemes 2-1 to 2-4.

### [Retransmission scheme 2-1]

In the retransmission scheme 2-1, when the notification of NACK is recognized to have been given from the eNB 20, the UE 10 applies transmission power higher than transmission power applied to the UL signal and then transmits the UL retransmission signal. For example, the UE 10 may increase the transmission power by n dB (for example, n = 3, or the like) each time the notification of NACK is recognized to have been given from the eNB 20. Further, when the notification of ACK is given from the eNB 20, the UE 10 may reset the transmission power for an uplink signal of a next transmission timing.

As a modified example of the retransmission scheme 2-1, when the notification of ACK is recognized to have been given from the eNB 20, the UE 10 may apply transmission power lower than transmission power applied to the UL signal at a previous transmission timing as the transmission power of the UL signal to be transmitted at a next transmission timing. In other words, when the notification of ACK is given, the UE 10 may relatively increase the transmission power of the UL retransmission signal by lowering the transmission power of the UL signal to be transmitted at the next transmission timing.

According to the retransmission scheme 2-1, since the UE 10 performs transmission such that the transmission power of the UL retransmission signal is higher than that of the UL signal, it is possible to increase a possibility of reception of the UL retransmission signal at the eNB 20.

### [Retransmission scheme 2-2]

The retransmission scheme 2-2 is under the assumption that repetitive transmission in a time axis method is applied to the transmission of the UL signal. The repetitive transmission is a technique of implementing the coverage enhancement or the like by transmitting the same signal repetitively (for example, 100 times) from the UE 10 in the time direction.

In the retransmission scheme 2-2, when the notification of NACK is recognized to have been given from the eNB 20, the UE 10 transmits the UL retransmission signal the number of repetitive transmissions more than the number of repetitive transmissions applied to the UL signal. For example, the UE 10 may increase the number of repetitive transmissions n times (for example, n = 2, or the like) each time the notification of NACK is recognized to have been given from the eNB 20. Further, when the notification of ACK is given from the eNB 20, the UE 10 may reset the number of repetitive transmissions for the uplink signal of the next transmission timing.

As a modified example of the retransmission scheme 2-2, when the notification of ACK is recognized to have been given from the eNB 20, the UE 10 may apply the number of repetitive transmissions smaller than the number of repetitive transmissions applied to the UL signal at the previous transmission timing (for example, increases the number of repetitive transmissions to be n times (n = 3/4 or the like). In other words, when the notification of ACK is given, the UE 10 relatively increases the number of repetitive transmissions of the UL retransmission signal by lowering the number of repetitive transmissions of the UL signal to be transmitted at the next transmission timing.

According to the retransmission scheme 2-2, since the UE 10 performs transmission such that the number of repetitive transmissions of the UL retransmission signal is larger than that of the UL signal, it is possible to increase the possibility of the reception of the UL retransmission signal at the eNB 20.

### [Retransmission scheme 2-3]

In the retransmission scheme 2-3, when the notification of NACK is recognized to have been given from the eNB 20, the UE 10 applies a modulation and coding scheme (MSC) which is a modulation scheme with a lower bit rate or a coding scheme with a lower code rate than an MSC applied to the UL signal and transmits the UL retransmission signal. For example, the UE 10 may decrease the level of the MCS by two steps each time the notification of NACK is recognized to have been given from the eNB 20. The level of the MCS is specified in advance, for example, in a standard specification, and the bit rate and/or the code rate of the modulation scheme is intended to decrease as the level of the MCS decreases. Further, when the notification of ACK is given from the eNB 20, the UE 10 may reset the level of the MCS for the uplink signal of the next transmission timing.

As a modified example of the retransmission scheme 2-3, when the notification of ACK is recognized to have been given from the eNB 20, the UE 10 may apply an MSC which is a modulation scheme with a higher bit rate or a coding scheme with a higher code rate than an MSC applied to the UL signal at the previous transmission timing as the MSC of the UL signal to be transmitted at the next transmission timing and transmit the UL retransmission signal. For example, the UE 10 may increase the level of the MCS by one step each time the notification of ACK is recognized to have been given from the eNB 20. In other words, when the notification of ACK is given, the UE 10 may relatively decrease the level of the MCS of the UL retransmission signal by increasing the level of the MCS of the UL signal to be transmitted at the next transmission timing.

According to the retransmission scheme 2-3, since the UE 10 performs transmission such that the level of the MCS of the UL retransmission signal is lower than that of the UL signal, it is possible to increase the possibility of the reception of the UL retransmission signal at the eNB 20.

As another example of the retransmission scheme 2-3, when the notification of NACK is recognized to have been given from the eNB 20, the UE 10 may transmit the UL retransmission signal with a larger codeword length than a codeword length (a parity length) applied to the UL signal. For example, the UE 10 may increase the number of read bits from a circular buffer each time the notification of NACK is recognized to have been notified from the eNB 20. Further, when the notification of ACK is given from the eNB 20, the UE 10 may reset the codeword length for the uplink signal of the next transmission timing.

In another example of the retransmission scheme 2-3, when ACK is recognized to have been notified from the eNB 20, the UE 10 may apply the codeword length smaller than the codeword length applied to the UL signal at the previous transmission timing as the codeword length of the UL signal to be transmitted at the next transmission timing (for example, increase the number of read bits from the circular buffer to be n times (n = 3/4 or the like). In other words, when the notification of ACK is given, the UE 10 may relatively increase the codeword length of the UL retransmission signal by decreasing the codeword length of the UL signal to be transmitted at the next transmission timing.

According to another example of the retransmission scheme 2-3, since the UE 10 performs transmission such that the codeword length of the UL retransmission signal is larger than that of the UL signal, it is possible to increase the possibility of the reception of the UL retransmission signal at the eNB 20.

### [Retransmission scheme 2-4]

The retransmission scheme 2-4 is under the assumption that frequency spreading based on a spread code is applied to the transmission of the UL signal.

In the retransmission scheme 2-4, when the notification of NACK is recognized to have been given from the eNB 20, the UE 10 transmits the UL retransmission signal at a spreading ratio higher than a spreading ratio applied to the UL signal (that is, using a spread code having a code length larger than a code length of a spread code applied to the UL signal).

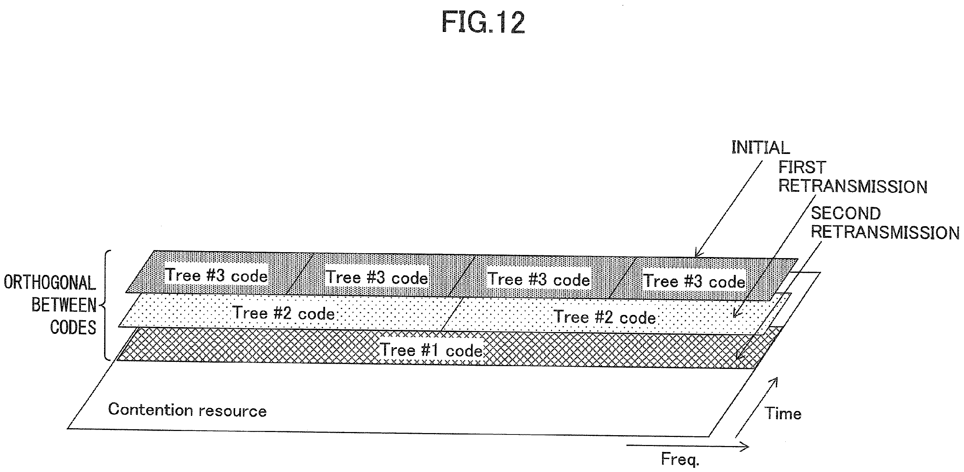

Fig. 12 is a diagram for describing the retransmission scheme 2-4. Further, points which are not particularly mentioned in Fig. 12 are the same as those in Fig. 8. For example, for example, the UE 10 transmit the UL signal while gradually increasing the spreading ratio each time the notification of NACK is recognized to have been given such that the spread code corresponding to the "tree #3 code" is applied when the UL signal is initially transmitted, the spread code corresponding to the "tree #2 code" is applied when the UL signal is retransmitted first time, and the spread code corresponding to the "tree #1 code" is applied when the UL signal is retransmitted second time.

As a modified example of the retransmission scheme 2-4, when the notification of ACK is recognized to have been notified from the eNB 20, the UE 10 may apply a spreading ratio lower than a spreading ratio applied to the UL signal at the previous transmission timing as a spreading ratio for transmission at the next transmission timing. In other words, when the notification of ACK is given, the UE 10 may relatively increase the spreading ratio of the UL retransmission signal by decreasing the spreading ratio of the UL signal to be transmitted at the next transmission timing.

According to the retransmission scheme 2-4, since the UE 10 perform transmission such that the spreading ratio of the UL retransmission signal is higher than that of the UL signal, it is possible to increase the possibility of the reception of the UL retransmission signal at the eNB 20.

### ("Retransmission scheme 3")

In the "retransmission scheme 3," the UE 10 controls the retransmission scheme for each of transmission elements included in the format of the UL signal.

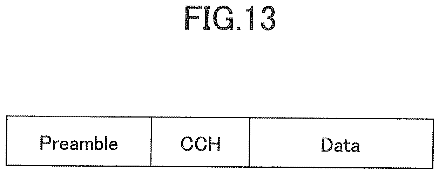

Fig. 13 is a diagram illustrating an example of the transmission elements included in the format of the UL signal. As illustrated in Fig. 13, the UL signal according to the present embodiment includes a "preamble," a "control channel (CCH)," and "data." The "preamble" is a region in which a preamble used for detection of an uplink signal, measurement of beam forming, channel estimation, and the like in eNB 20 is stored. The "CCH" is a region in which a buffer status report (BSR), a UE-ID, a UE capability, transmission power information (for NOMA), a modulation scheme, and uplink control information indicating positions of time and frequency resources to which UL data is mapped and the like are stored. The "data" is a region in which UL data such as user data is stored.

The "retransmission scheme 3" is further divided into retransmission schemes 3-1 to 3-3.

### [Retransmission scheme 3-1]

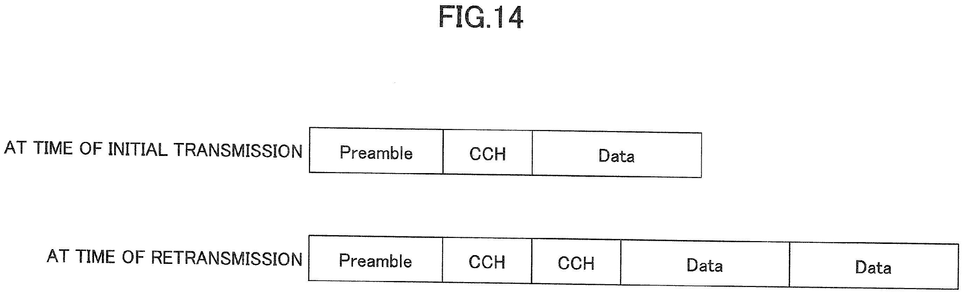

Fig. 14 is a diagram for describing the retransmission scheme 3-1. The retransmission scheme 3-1 is a retransmission scheme applicable when the UE 10 operates in accordance with the "UE operation pattern 1." As described above, the "UE operation pattern 1" corresponds to the "eNB operation pattern 1." In the "UE operation pattern 1," the UE 10 recognizes that the notification of NACK has been given from the eNB 20 when NACK is explicitly received from the eNB 20. In other words, the UE 10 can estimate that the eNB 20 has not detected the preamble stored in the "Preamble" of the UL signal (that is, has detected the UL signal), but the uplink control stored in the "CCH" or data stored in the "Data" has failed to be decoded.

In this regard, in the retransmission scheme 3-1, the UE 10 performs the retransmission of the UL signal so that a possibility that the "CCH" and/or the "Data" are correctly decoded by the eNB 20. The "retransmission scheme 3-1" is under the assumption that the eNB 20 can identify the UE 10 on the basis of a sequence of preambles stored in the "Preamble" and transmit NACK to the identified UE 10.

In the retransmission scheme 3-1, when the UL signal is retransmitted, the UE 10 may perform the retransmission of the UL signal by increasing an aggregation level of the uplink control information stored in the "CCH" of the UL retransmission signal. Here, the increasing of the aggregation level of the uplink control information means, for example, that the uplink control signal is mapped to more radio resources (for example, the number of control channel elements (CCEs) is increased).

Further, when the UL signal is retransmitted, the UE 10 may increase the number of repetitive transmissions of the "CCH" of the UL retransmission signal as illustrated in Fig. 14. In other words, the retransmission scheme described in the "retransmission scheme 2-2" may be applied to the "CCH."

Further, when the UL signal is retransmitted, the UE 10 may decrease the level of the MCS of data stored in the "Data" of the UL retransmission signal. In other words, the retransmission scheme described in the "retransmission scheme 2-3" may be applied to the "Data."

Further, when the UL signal is retransmitted, the UE 10 may increase the spreading ratio of data stored in the "Data" of the UL retransmission signal. In other words, the retransmission scheme described in the "retransmission scheme 2-4" may be applied to the "Data."

Further, when the UL signal is retransmitted, the UE 10 may increase the number of repetitive transmissions of the "Data" of the UL retransmission signal. In other words, the retransmission scheme described in the "retransmission scheme 2-2" may be applied to the "Data."

Further, when the UL signal is retransmitted, the UE 10 may change a redundancy version (RV) of data stored in the "Data" of the UL retransmission signal, and the eNB 20 side may perform combination (HARQ combination) on the data stored in the "Data" of the UL signal to be retransmitted.

All or some of the retransmission schemes related to the "CCH" or the "Data" described above may be combined.

According to the retransmission scheme 3-1, the UE 10 can increase the possibility that the "CCH" and/or the "Data" included in the UL retransmission signal are received at the eNB 20.

### [Retransmission scheme 3-2]

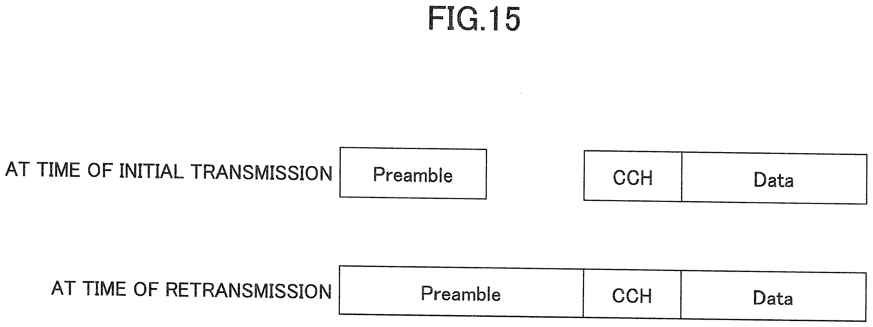

Fig. 15 is a diagram for describing the retransmission scheme 3-2. The retransmission scheme 3-2 is a retransmission scheme applicable when the UE 10 operates in accordance with the "UE operation pattern 2." As described above, the "UE operation pattern 2" corresponds to the "eNB operation pattern 1." In the "UE operation pattern 2," the UE 10 recognizes that the notification of NACK has been given from the eNB 20 when none of ACK and NACK have been received from the eNB 20. In other words, the UE 10 can estimate that the eNB 20 has not received the preamble stored in the "Preamble" of the UL signal (that is, the UL signal has not been received ever).

In this regard, in the retransmission scheme 3-2, the UE 10 performs retransmission of the UL signal so that a possibility that at least the "Preamble" is correctly recognized by the eNB 20.

In the retransmission scheme 3-2, the UE 10 may transmit the UL retransmission signal such that the transmission power of the preamble in the UL retransmission signal is higher than the transmission power applied to the UL signal. In other words, the retransmission scheme described in the "retransmission scheme 2-1" may be applied to the "Preamble."

Further, when the UL retransmission signal is transmitted, the UE 10 may transmit a preamble longer than a preamble length of a preamble used for the UL signal as illustrated in Fig. 15.

Further, when the UL signal is retransmitted, the UE 10 may increase or may not change the aggregation level of the uplink control information stored in the "CCH" of the UL retransmission signal.

Further, when the UL signal is retransmitted, the UE 10 may increase or may not change the number of repetitive transmissions of the "CCH" of the UL retransmission signal. In other words, the retransmission scheme described in the "retransmission scheme 2-2" may or may not be applied to the "CCH."

Further, when the UL signal is retransmitted, the UE 10 may decrease or may not change the level of the MCS of the data stored in the "Data" of the UL retransmission signal. In other words, the retransmission scheme described in the "retransmission scheme 2-3" may or may not be applied to the "Data."

Further, when the UL signal is retransmitted, the UE 10 may increase or may not change the spreading ratio of the data stored in the "Data" of the UL retransmission signal. In other words, the retransmission scheme described in the "retransmission scheme 2-4" above may or may not be applied to the "Data."

Further, when the UL signal is retransmitted, the UE 10 may increase or may not change the number of repetitive transmissions of the "Data" of the UL retransmission signal. In other words, the retransmission scheme described in the "retransmission scheme 2-2" may or may not be applied to the "Data.".

Further, when the UL signal is retransmitted, the UE 10 may change the RV of the data stored in the "Data" of the UL retransmission signal, and the eNB 20 side may perform combination of (HARQ combination) of the data stored in the "Data" of the UL signal to be retransmitted.

All or some of the retransmission schemes related to the "CCH" or the "Data" described above may be combined.

According to the retransmission scheme 3-2, the UE 10 can increase the possibility of the reception of at least the "Preamble" included in the UL retransmission signal in the eNB 20.

### [Retransmission scheme 3-3]

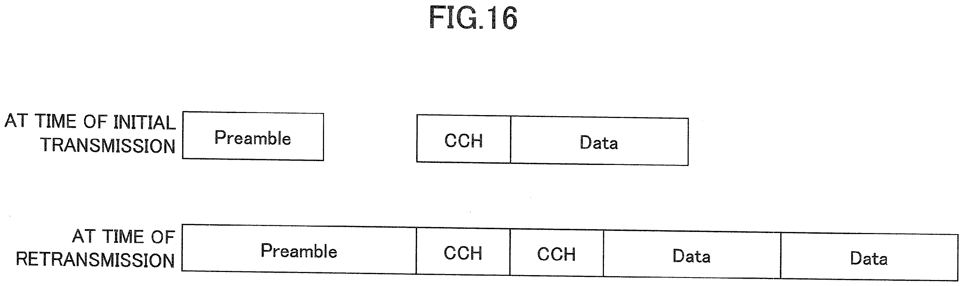

Fig. 16 is a diagram for describing the retransmission scheme 3-3. The retransmission scheme 3-3 is a retransmission scheme applicable when the UE 10 operates in accordance with the "UE operation pattern 3." As described above, the "UE operation pattern 3" corresponds to the "eNB operation pattern 2." In the "UE operation pattern 3," the UE 10 may recognize that the notification of NACK has been given from the eNB 20 when ACK has not been received from the eNB 20. In other words, the UE 10 can estimate that the eNB 20 has not received the preamble stored in the "Preamble" of the UL signal (that is, the UL signal has not been detected every) or that the eNB 20 has detected the UL signal but determines it to be NACK.

In this regard, in the retransmission scheme 3-3, the retransmission scheme 3-1 is combined with the retransmission scheme 3-2, and thus the UE 10 retransmit the UL signal so that a possibility that the "Preamble," the "CCH," and the "Data" are correctly recognized in the eNB 20. More specifically, when the UL retransmission signal is transmitted, the retransmission scheme described in the retransmission scheme 3-2 is applied to the "Preamble," and the retransmission scheme described in the retransmission scheme 3-1 is applied to the "CCH" and the "Data."

According to the retransmission scheme 3-3, the UE 10 can increase the possibility of the reception of the UL retransmission signal in the eNB 20.

### ("Retransmission scheme 4")

In the "retransmission scheme 4," each UE 10 performs the retransmission so that when the retransmission signal is transmitted, a similar collision to that when the UL signal is transmitted occurs (that is, so that the same radio resources are used by the UEs 10 in which a collision has occurred), and the eNB 20 side perform combination (HARQ combination) of collided signals. The retransmission scheme 4 is a retransmission scheme applicable when UE 10 operates in accordance with the "UE operation pattern 1." As described in the "retransmission scheme 3-1," the "UE operation pattern 1" corresponds to the case in which the eNB 20 has detected that the UL signal has been transmitted from the UE 10 but has failed to decode various kinds of data stored in the UL signal.

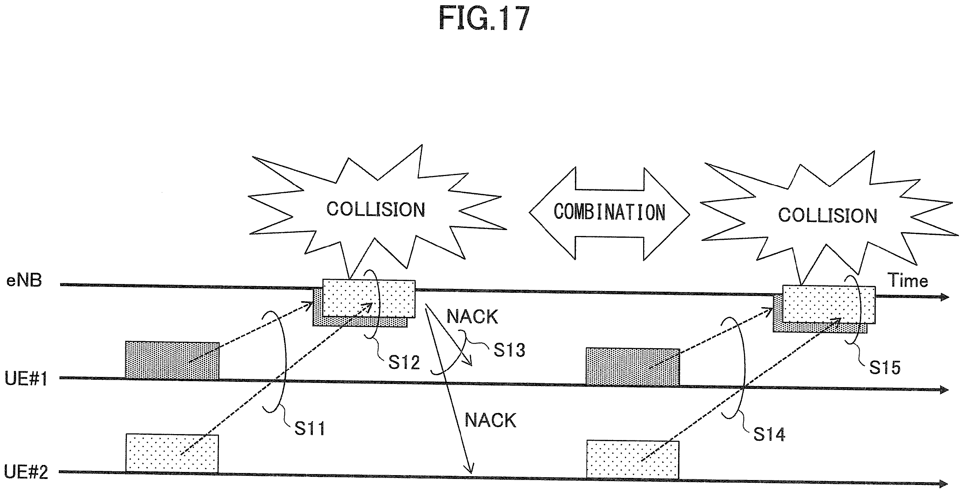

Fig. 17 is a diagram for describing the retransmission scheme 4. The retransmission scheme 4 is under the assumption that the same radio resources are in each UE 10 as radio resources used for retransmission in a higher layer or the like. Further, it is under the assumption that the eNB 20 can recognize the UE 10 from which the UL signal is transmitted, for example, using a sequence of preambles or the like included in the UL signal. Furthermore, it is under the assumption that the eNB 20 can separate the UL signal transmitted from each UE 10 using a signal canceller or the like.

First, the respective UEs 10 (the UE #1 and the UE #2) transmit the UL signals using the same radio resources (S11). Then, due to a collision of the UL signals, the eNB 20 fails to decode various kinds of data stored in the UL signal (for example, fails in the CRC check) (S12). Then, the eNB 20 transmits NACK to the respective UEs 10 (the UE #1 and the UE #2) (S13). Then, the respective UEs 10 (the UE #1 and the UE #2) transmit the UL retransmission signals using the same radio resources (S14). The eNB 20 makes an attempt to decode data by performing the HARQ combination on the data stored in the UL signals received from the respective UEs 10 (S15). If the decoding fails, the eNB 20 can decode the data stored in the UL signals received from the UEs 10 by further repeating the above operations (S13 to S15).

According to the retransmission scheme 4, since the radio resources used for retransmission are not disposed among UEs 10 in which a collision has occurred, it is possible to prevent interference with signals transmitted through other radio resources.

### (Supplemental matters common to respective retransmission schemes)

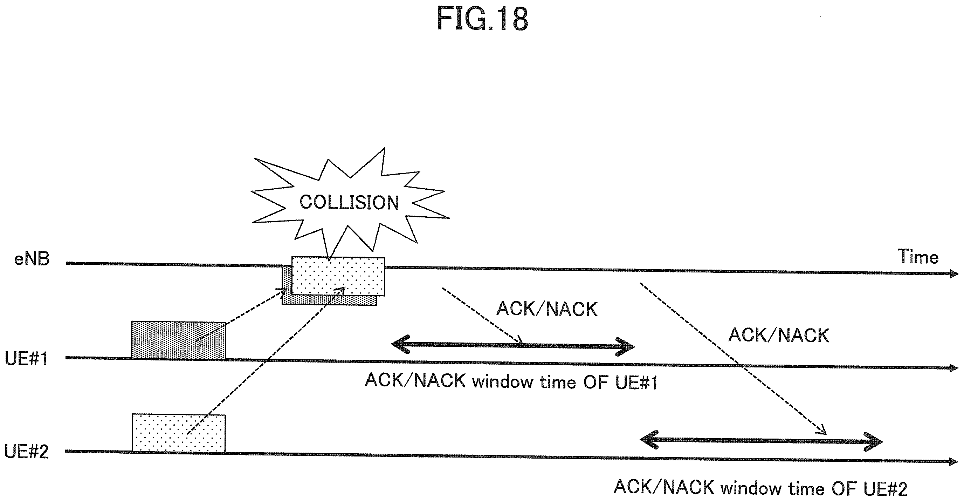

As illustrated in Fig. 18, in the present radio communication system, the reception timings (the reception windows) for ACK/NACK transmitted from the eNB 20 with respect to the UL signals transmitted at the same transmission timing may be dispersed among the UEs 10. The reception timing (reception window) for ACK/NACK may be decided on the basis of information specific to the UE 10 (for example, a UE-ID, an IMSI, a C-RNTI, or the like) or may be set for each UE 10 using a higher layer (RRC or the like).

As a result, it is possible to disperse traffic related to ACK/NACK transmission of the downlink (DL), and it is possible to disperse timings at which the UEs 10 transmits the UL retransmission signals.

### <Functional configuration>

Exemplary functional configurations of the UE 10 and the eNB 20 that perform the operations of the above-described embodiments will be described.

### (UE)

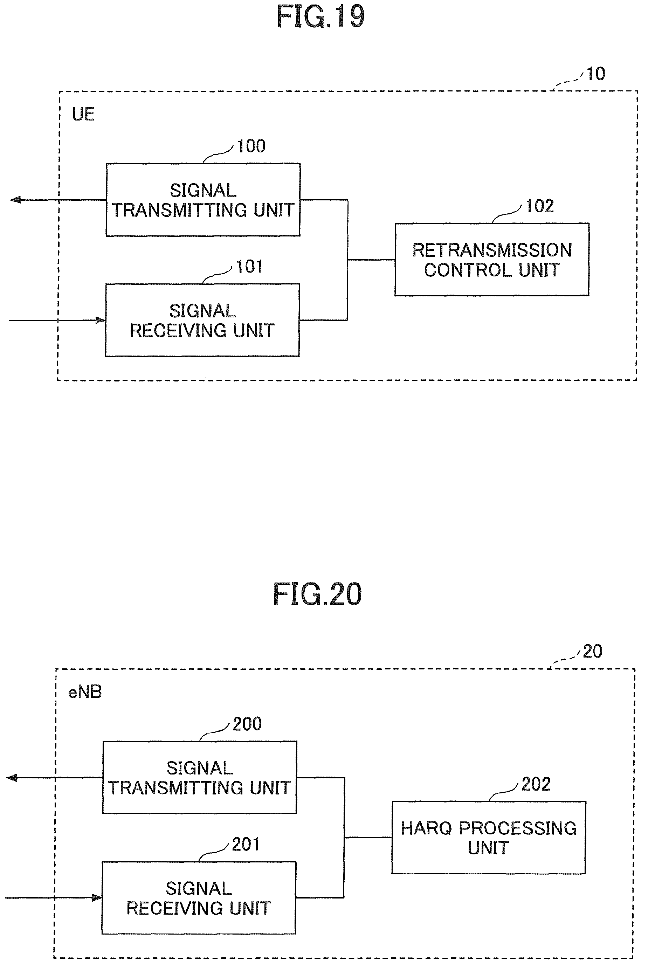

Fig. 19 is a diagram illustrating an example of a functional configuration of the UE according to the embodiment. As illustrated in Fig. 19, the UE 10 includes a signal transmitting unit 100, a signal receiving unit 101, and a retransmission control unit 102. Fig. 19 illustrates only functional units of the UE 10 particularly related to the embodiment of the present invention, and functions (not illustrated) of performing at least operations conforming to the radio scheme according to the present embodiment are also provided.

Further, the functional configuration illustrated in Fig. 19 is merely an example. Any classification or any name may be used as a function classification or a name of a functional unit as long as the operation according to the preset embodiment can be performed. However, some of the processes of the UE 10 described above (for example, the specific one or more retransmission schemes, the modified examples, the specific examples, or the like) may be performed.

The signal transmitting unit 100 has a function of generating various kinds of signals of the physical layer from signals of a higher layer to be transmitted from the user equipment UE and wirelessly transmitting the signals. Further, the signal transmitting unit 100 has a function of retransmitting the uplink signal on the basis of a predetermined retransmission scheme when the retransmission control unit 102 determines that the retransmission of the uplink signal is performed.

Further, as the predetermined retransmission scheme (for example, the retransmission scheme 1-1), when the retransmission control unit 102 detects that NACK with respect to the uplink signal has been received consecutively a predetermined number of times or when the retransmission control unit 102 detects that none of ACK and NACK with respect to the transmitted uplink signal has been received consecutively a predetermined number of times, the signal transmitting unit 100 may transmit the scheduling request to the eNB 20 and retransmit the uplink signal using the uplink radio resources allocated from the eNB 20 on the basis of the scheduling request.

Further, as the predetermined retransmission scheme (for example, the retransmission scheme 1-2), when the retransmission control unit 102 determines that the retransmission of the uplink signal is performed, the signal transmitting unit 100 may retransmit the uplink signal after a predetermined time (back-off time) elapses.

Further, as the predetermined retransmission scheme (for example, the retransmission scheme 1-3), when the frequency hopping is applied to the transmission of the uplink signal, and the retransmission control unit 102 determines that the retransmission of the uplink signal is performed, the signal transmitting unit 100 may retransmit the uplink signal using the frequency hopping pattern different from the frequency hopping pattern used for the transmission of the uplink signal.

Further, as the predetermined retransmission scheme (for example, the retransmission scheme 1-4), when the frequency spreading using the spread code is applied to the transmission of the uplink signal, and the retransmission control unit 102 determines that the retransmission of the uplink signal is performed, the signal transmitting unit 100 may retransmit the uplink signal using the spread code different from the spread code used for the transmission of the uplink signal.

Further, as the predetermined retransmission scheme (for example, the retransmission scheme 1-5), when the IDMA scheme is applied to in the transmission of the uplink signal, and the retransmission control unit 102 determines that the retransmission of the uplink signal is performed, the signal transmitting unit 100 may retransmit the uplink signal using the interleaving pattern different from the interleaving pattern used for the transmission of the uplink signal.

Further, the signal transmitting unit 100 has a function of retransmitting the uplink signal on the basis of a predetermined retransmission scheme when the ACK is received through the signal receiving unit 101, and the retransmission control unit 102 determines that the uplink signal of the next transmission timing in accordance with a predetermined retransmission scheme or that the retransmission of the uplink signal is performed.

Further, as the predetermined retransmission scheme (for example, the modified example of the retransmission scheme 2-1), the signal transmitting unit 100 may apply the transmission power lower than the transmission power applied to the uplink signal of the previous transmission timing and then transmit the uplink signal of the next transmission timing, or as the predetermined retransmission scheme (for example, the retransmission scheme 2-1), the signal transmitting unit 100 may apply the transmission power higher than the transmission power applied to the uplink signal and then transmit the uplink retransmission signal.

Further, the signal transmitting unit 100 may apply the repetitive transmission to the transmission of the uplink signal and apply the number of repetitive transmissions smaller than the number of repetitive transmissions applied to the uplink signal of the previous transmission timing and then transmit the uplink signal of the next transmission timing as the predetermined retransmission scheme (for example, the modified example of the retransmission scheme 2-2), or the signal transmitting unit 100 may apply the repetitive transmission to the transmission of the uplink signal and apply the number of repetitive transmissions smaller than the number of repetitive transmissions applied to the uplink signal of the previous transmission timing and then transmit the uplink retransmission signal as the retransmission scheme (for example, the retransmission scheme 2-2).

Further, as the predetermined retransmission scheme (for example, the modified example of retransmission scheme 2-3), the signal transmitting unit 100 may apply the modulation scheme with the higher bit rate or the coding scheme with the higher code rate than the modulation scheme or the coding scheme applied to the uplink signal of the previous transmission timing and then transmit the uplink signal of the next transmission timing, or as the predetermined retransmission scheme (for example, the retransmission scheme 2-3), the signal transmitting unit 100 may apply the modulation scheme with the lower bit rate or the coding scheme with the lower code rate than the modulation scheme or the coding scheme applied to the uplink signal of the previous transmission timing and then transmit the uplink retransmission signal.

Further, as the predetermined retransmission scheme (for example, the modified example of retransmission scheme 2-4), the signal transmitting unit 100 may apply the spreading ratio lower than the spreading ratio of the spread code applied to the uplink signal of the previous transmission timing and then transmit the uplink signal of the next transmission timing, or as the predetermined retransmission scheme (for example, the retransmission scheme 2-4), the signal transmitting unit 100 may apply the spreading ratio higher than the spreading ratio of the spread code applied to the uplink signal of the previous transmission timing and then transmit the uplink retransmission signal.

Further, when none of ACK and NACK has been received with respire to the uplink signal, and the retransmission control unit 102 determines that the retransmission of the uplink signal is performed, the signal transmitting unit 100 may apply a predetermined retransmission scheme (for example, the retransmission scheme 2-1, the retransmission scheme 3-2, or the retransmission scheme 3-3) to the transmission of the preamble in the uplink signal and then retransmit the uplink signal.

Further, when the retransmission control unit 102 determines that the retransmission of the uplink signal is performed, the signal transmitting unit 100 may apply a predetermined retransmission scheme (for example, the retransmission scheme 2-2, the retransmission scheme 2-3, the retransmission scheme 3-1, or the retransmission scheme 3-3) to the transmission of the uplink data included in the uplink signal and then retransmit the uplink signal.

The signal receiving unit 101 has a function of wirelessly receiving various kinds of signals from other user equipment UEs or the base station eNB and acquiring signals of a higher layer from received signals of the physical layer. The signal receiving unit 101 further has a function of receiving ACK or NACK from the eNB 20 with respect to the uplink signal.

The retransmission control unit 102 has a function of determining that the retransmission of the uplink signal is performed when NACK is received from the eNB 20 with respire to the uplink signal or when none of ACK and NACK is received with respect to the uplink signal.

### (eNB)

Fig. 20 is a diagram illustrating an example of a functional configuration of the eNB according to the embodiment. As illustrated in Fig. 20, the eNB 20 includes a signal transmitting unit 200, a signal receiving unit 201, and a HARQ processing unit 202. Fig. 20 illustrates only functional units of the eNB 20 particularly related to the embodiment of the present invention, and functions (not illustrated) of performing at least operations conforming to the radio scheme according to the present embodiment are also provided. Further, the functional configuration illustrated in Fig. 20 is merely an example. Any classification or any name may be used as a function classification or a name of a functional unit as long as the operation according to the preset embodiment can be performed. However, some of the processes of the eNB 20 described above (for example, the specific one or more retransmission schemes, the modified examples, the specific examples, or the like) may be performed.

The signal transmitting unit 200 has a function of generating various kinds of signals of the physical layer from signals of a higher layer to be transmitted from the eNB 20 and wirelessly transmitting the signals. The signal receiving unit 201 includes a function of wirelessly receiving various kinds of signals from the UE 10 and acquiring signals of a higher layer from received signals of the physical layer.

The HARQ processing unit 202 has a function of transmitting ACK/NACK to the UE 10 with respect to the uplink signal received through the signal receiving unit 201. Further, the HARQ processing unit 202 has a function of performing a combination process (HARQ combination) using the uplink signal and the retransmission signal received through the signal receiving unit 201.

### <Hardware configuration>

In the block diagrams (Figs. 19 and 20) used for the description of the above embodiment, the blocks of the functional units are illustrated. The functional blocks (configuring units) are implemented by an arbitrary combination of hardware and/or software. A device of implementing each functional block is not particularly limited. In other words, each functional block may be implemented by one device which is physically and/or logically combined or may be implemented by a plurality of devices, that is, two or more devices which are physically and/or logically separated and are directly and/or indirectly connected (for example, a wired and/or wireless manner).

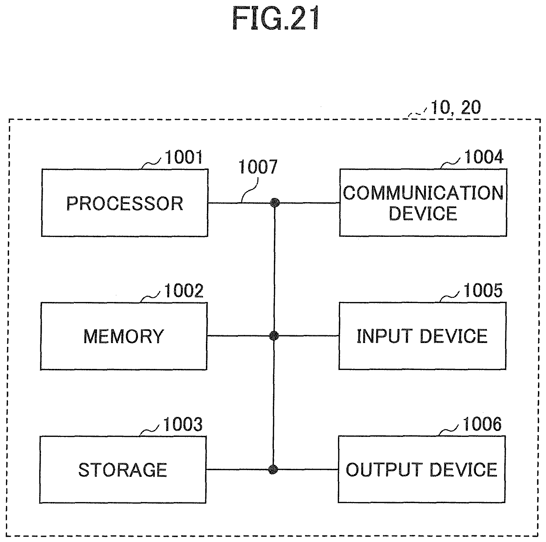

For example, each of the UE 10 and the eNB 20 in the embodiment may function as a computer that performs the process of the radio communication method of the present invention. Fig. 21 is a diagram illustrating an example of a hardware configuration of each of the UE 10 and the eNB 20 according to the embodiment. Each of the UE 10 and eNB 20 may be physically configured as a computer device that includes a processor 1001, a memory 1002, a storage 1003, a communication device 1004, an input device 1005, an output device 1006, and a bus 1007.

In the following description, the term "device" can be replaced with a circuit, a device, a unit, or the like. The hardware configuration of each of the UE 10 and the eNB 20 may be configured to include one or more devices illustrated in the drawing or may be configured without including some devices.

Each function in the UE 10 and the eNB 20 is implemented such that predetermined software (program) is read on hardware such as the processor 1001 and the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be configured with a central processing unit (CPU) including an interface with a peripheral device, a control device, an operation device, a register, and the like. For example, the signal transmitting unit 100, the signal receiving unit 101, and the retransmission control unit 102 of the UE 10, the signal transmitting unit 200, the signal receiving unit 201, and the HARQ processing unit 202 of the eNB 20may be implemented by the processor 1001.

Further, the processor 1001 reads a program (a program code), a software module, and data from the storage 1003 and/or the communication device 1004 out to the memory 1002, and performs various kinds of processes according to them. A program causing a computer to execute at least some of the operations described in the above embodiment is used as the program. For example, the signal transmitting unit 100, the signal receiving unit 101, and the retransmission control unit 102 of the UE 10and the signal transmitting unit 200, the signal receiving unit 201, and the HARQ processing unit 202 of the eNB 20 may be implemented by a control program which is stored in the memory 1002 and operates on the processor 1001, or the other functional blocks may be similarly implemented. Various kinds of processes have been described as being performed by one processor 1001 but may be performed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the radio communication method according to an embodiment of the present embodiment.

The storage 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transceiving device) for performing communication between computers via a wired and/or wireless network and is also referred to as a "network device," a "network controller," a "network card," a "communication module," or the like. For example, the signal transmitting unit 100 and the signal receiving unit 101 of the UE 10, the signal transmitting unit 200 and the signal receiving unit 201 of the eNB 20 may be implemented by the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integratedly configured (for example, a touch panel).

The respective devices such as the processor 1001 and the memory 1002 are connected via the bus 1007 to communicate information with each other. The bus 1007 may be configured with a single bus or may be configured with different buses between the devices.

Further, the UE 10 and the eNB 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### <Conclusion>

According to the embodiment, provided is a user equipment in a radio communication system that includes a plurality of user equipments and a base station and supports a communication scheme in which uplink radio resources are shared by the plurality of user equipments, and the user equipment includes a control unit that determines that retransmission of an uplink signal is performed when NACK is received from the base station with respect to the uplink signal or when none of ACK and NACK are received with respect to the uplink signal and a transmitting unit that retransmits the uplink signal on the basis of a predetermined retransmission scheme when the control unit determines that the retransmission of the uplink signal is performed. Accordingly, a technique capable of efficiently performing retransmission of UL signals when a contention based access scheme is used is provided.

Further, when the control unit detects that NACK has been received with respect to the uplink signal consecutively a predetermined number of times or when none of ACK and NACK have received with respect to the transmitted uplink signal consecutively a predetermined number of times, the transmitting unit may transmit a scheduling request to the base station and retransmit the uplink signal using uplink radio resources allocated from the base station on the basis of the scheduling request. Accordingly, when the notification of NACK is recognized to have been given consecutively a plurality of times, the UE 10 can perform switching to the non-contention based access scheme and transmit the UL signal more efficiently.

Further, the transmitting unit may apply frequency hopping to the transmission of the uplink signal and retransmit the uplink signal using a frequency hopping pattern different from a frequency hopping pattern used for the transmission of the uplink signal when the control unit determines that the retransmission of the uplink signal is performed. Accordingly, the transmission resources of the UL signal are dispersed among the UEs 10, and the possibility of the collision of the UL retransmission signal is reduced. Further, when the frequency hopping is applied to the transmission of the UL signal, the possibility of the collision of the UL retransmission signal can be reduced.

The transmitting unit may apply frequency spreading using a spread code to the transmission of the uplink signal and retransmit the uplink signal using a spread code different from a spread code used for the transmission of the uplink signal when the control unit determines that the retransmission of the uplink signal is performed. Accordingly, at the time of UL retransmission, different spread codes are applied to the respective UEs 10, and thus the possibility of the collision of the UL retransmission signal can be reduced. Further, when the frequency spreading based on the spread code is applied to the transmission of the UL signal, the possibility of the collision of the UL retransmission signal can be reduced.

The transmitting unit may apply an access scheme in which the uplink signal is multiplexed by applying a different interleaving pattern for each uplink signal in the transmission of the uplink signal and retransmit the uplink signal using an interleaving pattern different from an interleaving pattern used for the transmission of the uplink signal when the control unit determines that the retransmission of the uplink signal is performed. Accordingly, at the time of UL retransmission, the different interleaving patterns are applied to the respective UEs 10, and thus the possibility of the collision of the UL retransmission signal can be reduced. Further, when the IDMA is applied to the transmission of the UL signal, the possibility of the collision of the UL retransmission signal can be reduced.

According to the embodiment, provided is a radio communication method performed by a user equipment in a radio communication system that includes a plurality of user equipments and a base station and supports a communication scheme in which uplink radio resources are shared by the plurality of user equipments, and the radio communication method includes a step of determining that retransmission of an uplink signal is performed when NACK is received from the base station with respect to the uplink signal or when none of ACK and NACK are received with respect to the uplink signal and a step of retransmits the uplink signal on the basis of a predetermined retransmission scheme when the retransmission of the uplink signal is determined to be performed. According to the radio communication method, a technique capable of efficiently performing retransmission of UL signals when a contention based access scheme is used is provided.

According to the embodiment, provided is a user equipment in a radio communication system that includes a plurality of user equipments and a base station and supports a communication scheme in which uplink radio resources are shared by the plurality of user equipments, and the user equipment includes a receiving unit that receives ACK or NACK from the base station with respect to an uplink signal, a control unit that determines that retransmission of the uplink signal is performed when the receiving unit receives NACK with respect to the uplink signal or when none of ACK and NACK are received with respect to the uplink signal, and a transmitting unit that transmits an uplink signal of a next transmission timing in accordance with a first retransmission scheme when the receiving unit receives ACK or retransmits the uplink signal in accordance with a second retransmission scheme when the control unit determines that the retransmission of the uplink signal is performed. Accordingly, a technique capable of efficiently performing retransmission of UL signals when a contention based access scheme is used is provided.

Further, the transmitting unit may apply transmission power lower than transmission power applied to an uplink signal of a previous transmission timing and transmit the uplink signal of the next transmission timing as the first retransmission scheme or apply transmission power higher than the transmission power applied to the uplink signal and transmit an uplink retransmission signal as the second retransmission scheme. Accordingly, since the UE 10 performs transmission such that the transmission power of the UL retransmission signal is higher than that of the UL signal, the possibility of the reception of the UL retransmission signal in the eNB 20 can be increased.

Further, the transmitting unit may apply repetitive transmission to the transmission of the uplink signal, apply the number of repetitive transmissions smaller than the number of repetitive transmissions applied to an uplink signal of a previous transmission timing, and transmit the uplink signal of the next transmission timing as the first retransmission scheme or apply repetitive transmission to the transmission of the uplink signal, apply the number of repetitive transmissions smaller than the number of repetitive transmissions applied to the uplink signal, and transmit the uplink retransmission signal as the second retransmission scheme. Accordingly, since the UE 10 performs transmission such that the number of repetitive transmissions of the UL retransmission signal is larger than that of the UL signal, the possibility of the reception of the UL retransmission signal in the eNB 20 can be increased.

Further, the transmitting unit may apply a modulation scheme with a higher bit rate or a coding scheme with a higher code rate than a modulation scheme or a coding scheme applied to an uplink signal of a previous transmission timing and transmit the uplink signal of the next transmission timing as the first retransmission scheme or apply a modulation scheme with a lower bit rate or a coding scheme with a lower code rate than a modulation scheme or a coding scheme applied to applied to the uplink signal and transmit the uplink retransmission signal as the second retransmission scheme. Accordingly, since the UE 10 transmits the retransmission signal such that the bit rate or the code rate of the modulation scheme of the UL retransmission signal is lower than the bit rate or the code rate of the modulation scheme of the UL signal, the possibility of the reception of the UL retransmission signal in the eNB 20 can be increased.

Further, the uplink signal may include a preamble used for detection of the uplink signal in the base station, uplink control information indicating information related to uplink data, and the uplink data, the control unit may determine that the retransmission of the uplink signal is performed when the receiving unit receives none of ACK and NACK with respect to the uplink signal, and when the control unit determines that the retransmission of the uplink signal is performed, the transmitting unit applies the second retransmission scheme to transmission of the preamble in the uplink signal and retransmits the uplink signal. Accordingly, the UE 10 can increase the possibility that at least the "Preamble" included in the UL retransmission signal can be received by the eNB 20.

Further, provided is a radio communication method performed by a user equipment in a radio communication system that includes a plurality of user equipments and a base station and supports a communication scheme in which uplink radio resources are shared by the plurality of user equipments, and the radio communication method includes a reception step of receiving ACK or NACK from the base station with respect to an uplink signal, a determination step of determining that retransmission of the uplink signal is performed when NACK is received with respect to the uplink signal or when none of ACK and NACK are received with respect to the uplink signal, and a step of transmitting an uplink signal of a next transmission timing in accordance with a first retransmission scheme when ACK is received in the reception step or retransmitting the uplink signal in accordance with a second retransmission scheme when the retransmission of the uplink signal is determined to be performed in the determination step. According to the radio communication method, a technique capable of efficiently performing retransmission of UL signals when a contention based access scheme is used is provided.

### <Supplement of embodiment>

The "retransmission scheme 1-1" to the "retransmission scheme 1-5," the "retransmission scheme 2-1" to the "retransmission scheme 2-4," the "retransmission scheme 3-1" to the "retransmission scheme 3-3," and the "retransmission scheme 4" can be arbitrarily combined as long as there is no inconsistency in the processing procedure.

Information transmission (notification, reporting) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, an RRC message may be referred to as RRC signaling. Further, an RRC message may be, for example, an RRC connection setup message, an RRC connection reconfiguration message, or the like.

Each aspect and embodiment of the present invention may be applied to LTE, LTE-advanced (LTE-A), SUPER 3G, IMT-Advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), a system using any other appropriate system, and/or next generation systems extended on the basis of these standards.

The mobile station UE is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, depending on those having skill in the art.

The eNB 20 may be referred to as a node B (NB), a base station, or other appropriate terms, depending on those having skill in the art.

The processing procedures, the sequences, and the like of the respective aspects/embodiments described in this specification may be reversed in order unless there is a contradiction. For example, the method described in this specification presents elements of various steps in an exemplary order and is not limited to a presented specific order.

The terms described in this specification and/or terms necessary for understanding this specification may be replaced with terms having the same or similar meanings. For example, a channel and/or a symbol may be a signal. Further, a signal may be a message.

Input/output information, etc., may be stored in a specific place (e.g., memory) or may be stored in a management table. The input/output information, etc., may be overwritten, updated, or added. Output information, etc., may be deleted. Input information, etc., may be transmitted to another apparatus.

Each aspect/embodiment described in this specification may be used alone, may be used in combination, or may be switched in association with execution. Further, a notification of predetermined information (for example, a notification indicating "being X") is not limited to one which is performed explicitly and may be performed implicitly (for example, a notification of predetermined information is not given).

Information, a signal, etc., described in the present specification may be represented by using any one of the various different techniques. For example, data, an instruction, a command, information, a signal, a bit, a symbol, a chip or the like described throughout in the present specification may be represented by voltage, current, electromagnetic waves, magnetic fields or a magnetic particle, optical fields or a photon, or any combination thereof.

The terms "determining" and "deciding" used in this specification may include a wide variety of actions. For example, "determining" and "deciding" may include, for example, events in which events such as judging, calculating, computing, processing, deriving, investigating, looking up (for example, looking up in a table, a database, or another data structure), or ascertaining are regarded as "determining" or "deciding." Further, "determining" and "deciding" may include, for example, events in which events such as receiving (for example, receiving information), transmitting (for example, transmitting information), input, output, or accessing (for example, accessing data in a memory) are regarded as "determining" or "deciding." Further, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding."

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. When used in this specification, two elements may be considered to be "connected" or "coupled" with each other using one or more electric wires, cables and/or a printed electrical connection or using electromagnetic energy such as electromagnetic energy having a wavelength in a radio frequency domain, a microwave region, or a light (both visible and invisible) region as non-limiting and non-exhaustive examples.

A phrase "on the basis of" used in this specification is not limited to "on the basis of only" unless otherwise stated. In other words, a phrase "on the basis of" means both "on the basis of only" and "on the basis of at least."

Any reference to an element using a designation such as "first," "second," or the like used in this specification does not generally restrict quantities or an order of those elements. Such designations can be used in this specification as a convenient method of distinguishing between two or more elements. Thus, reference to the first and second elements does not mean that only two elements can be adopted there, or first element must precede the second element in a certain form.

"Including," "comprising," and variations thereof are intended to be comprehensive, similarly to a term "equipped with" as long as the terms are used in this specification or claims set forth below. Furthermore, the term "or" used in this specification or claims set forth below is intended not to be an exclusive disjunction.

In the present disclosure, for example, when an article such as "a," "an," or "the" in English is added by a translation, such an article is assumed to include the plural unless it is obviously indicated that such an article does not include the plural.

Although the present invention has been described above in detail, it is obvious to those having skill in the art that the present invention is not limited to the embodiments described in this specification. The present invention can be carried out as revisions and modifications without departing from the gist and scope of the present invention decided in claims set forth below. Therefore, the description of this specification is intended to be exemplary and does not have any restrictive meaning to the present invention.

The present application is based on and claims priority to Japanese patent application No. 2016-140734 filed on July 15, 2016, the entire contents of which are hereby incorporated by reference.

### EXPLANATIONS OF LETTERS OR NUMERALS

- 10: UE
- 20: eNB
- 100: signal transmitting unit
- 101: signal receiving unit
- 102: retransmission control unit
- 200: signal transmitting unit
- 201: signal receiving unit
- 202: HARQ processing unit
- 1001: processor
- 1002: memory
- 1003: storage
- 1004: communication device
- 1005: input device
- 1006: output device

## Claims

1. A user equipment in a radio communication system that includes a plurality of user equipments and a base station and supports a communication scheme in which uplink radio resources are shared by the plurality of user equipments, the user equipment comprising:
a control unit that determines that retransmission of an uplink signal is performed when NACK is received from the base station with respect to the uplink signal or when none of ACK and NACK are received with respect to the uplink signal; and
a transmitting unit that retransmits the uplink signal on the basis of a predetermined retransmission scheme when the control unit determines that the retransmission of the uplink signal is performed.

2. The user equipment according to claim 1,
wherein when the control unit detects that NACK has been received with respect to the uplink signal consecutively a predetermined number of times or when it has been detected that none of ACK and NACK are received with respect to the transmitted uplink signal consecutively a predetermined number of times, the transmitting unit transmits a scheduling request to the base station, and retransmits the uplink signal using uplink radio resources allocated from the base station on the basis of the scheduling request.

3. The user equipment according to claim 1 or 2,
wherein the transmitting unit applies frequency hopping to the transmission of the uplink signal and retransmits the uplink signal using a frequency hopping pattern different from a frequency hopping pattern used for the transmission of the uplink signal when the control unit determines that the retransmission of the uplink signal is performed.

4. The user equipment according to any one of claims 1 to 3,
wherein the transmitting unit applies frequency spreading using a spread code to the transmission of the uplink signal and retransmits the uplink signal using a spread code different from a spread code used for the transmission of the uplink signal when the control unit determines that the retransmission of the uplink signal is performed.

5. The user equipment according to any one of claims 1 to 4,
wherein the transmitting unit applies an access scheme in which the uplink signal is multiplexed by applying a different interleaving pattern for each uplink signal in the transmission of the uplink signal and retransmits the uplink signal using an interleaving pattern different from an interleaving pattern used for the transmission of the uplink signal when the control unit determines that the retransmission of the uplink signal is performed.

6. A radio communication method performed by a user equipment in a radio communication system that includes a plurality of user equipments and a base station and supports a communication scheme in which uplink radio resources are shared by the plurality of user equipments, the radio communication method comprising:
a step of determining that retransmission of an uplink signal is performed when NACK is received from the base station with respect to the uplink signal or when none of ACK and NACK are received with respect to the uplink signal; and
a step of retransmitting the uplink signal on the basis of a predetermined retransmission scheme when the retransmission of the uplink signal is determined to be performed.
